# EUROPEAN PATENT APPLICATION

(11) **EP 1 970 824 A1**
(43) Date of publication of application: **17.09.2008**
(21) Application number: 08102678.3
(22) Date of filing: 17.03.2008
(51) Int. Cl.: G06F 17/30

(54) **System and method for creation of automated content dependent procedures in an online environment**

(30) Priority: 15.03.2007 US 895013 P
(71) Applicant: MAGIX AG, 10117 Berlin (DE)
(72) Inventor: Herberger, Tilman, 01219, Dresden (DE); Tost, Titus, 01219, Dresden (DE)

(57) **Abstract**

There is provided a system and method for creating automated content dependent procedures in an online environment, wherein the user will be able to create graphical objects representing a collection of operations and desired online services, wherein both the editing operations and desired online services are associated with a specific type file, preferably a file type of a data file. The process is based on selection of a file type by the user and is illustrated to the user by a graphical user interface containing the content dependent information. With this approach the user will be able to create automated procedures for processing of computer file types.

## Description

### FIELD OF THE INVENTION

The present invention relates generally to the field of data processing and distribution over the Internet. More particularly, but not by way of limitation, the present invention relates to processes by which a user can interact with files in an online environment.

### BACKGROUND OF THE INVENTION

It is well known that the means by which a user interacts with a computer are much different today than they were was even a few years ago. Each component part of the user interface (including, e.g., the operating system) has undergone a tremendous evolution in functionality in the time since the first personal computer appeared. Although today things are much better than they were in the era of command-line interfaces, the current metaphor for dealing with the operating system, i.e., the desktop metaphor, is at least 20 years old.

The desktop metaphor has become the predominant method of allowing a user to interact with a computer. This visual approach to file manipulation was adopted early on by operating systems from Atari^{®}, Amiga^{®} ,and Macintosh^{®} and continues today in virtually every modern operating system. The many advantages of using a desktop-based approach should be clear to anyone who has ever used such. Among those advantages are, that the user need not memorize a complex command syntax as is required, for example, in Unix; that individual files are easily located and manipulated (e.g., copied, deleted, duplicated, etc.), that the desktop metaphor is well suited to use with a mouse or other pointing device, and that the workings of the software desktop in many ways mimic the user's physical desktop which makes training a user who is new to this approach much easier than it might be otherwise, etc.

The desktop is the point of entry for the typical user who seeks to access and manipulate data and content on his or her personal computer. As has been mentioned previously, the desktop has also undergone a variety of developmental steps, wherein the core functions remained more or less unchanged, but additional functionality has been added. The functionality improvements depend, at least to some extent, on the operating system in question and include, introduction of the "dock" (Mac OS X^{tm}), the taskbar (Windows^{®}), the quick launch bar (Windows^{®}), and the use of small information aggregating programs (Widgets/Gadgets) that are connected to the Internet to provide the user with dynamic information regarding the weather, stocks, etc.

In recent years the Internet has developed into a global medium for communication of data to the point where its importance in the everyday lives of its users has grown to levels comparable to those of TV, radio or print media. This development can be attributed to the evolution of the Internet from a simple network which was devoted solely to the transfer of academic publications and data into a network via which all sorts of multimedia and other data (e.g., video, audio, etc.) are available and transferable.

This transformation of the Internet into a medium that is readily accessible by the consumer has led businesses onto the Internet. Initially, these companies were only interested in displaying their company contact information on their website. However, today there is a mass migration of business interests onto the Internet which, in extreme cases, has resulted in businesses that have no presence outside of that network. Obvious examples of such businesses include Google^{®} and Yahoo^{®}, whose main business is the provision of search services to the user which is funded, of course, by the sale of advertisements/placement of advertisements that a user views along with their search results.

Of course, the previous examples are not the only companies that have adopted the "whole-business-into-the-Internet" model. Salesforce^{®} for example is providing hosted software solutions to its customers. Amazon^{®} is another well-known company that does not have a brick and mortar presence and is reachable by its customers only via the Internet. Further, familiar desktop applications are similarly being migrated onto the Internet. Applications such as word processing, spreadsheets, and calendars, etc., which have traditionally been desktop-based are becoming increasingly available via the Internet. The pricing model of this sort of software is in flux with pay-per-use models and low cost (or free) open-source products being made available via this approach.

The net result of many of these developments has been a gradual shift away from the well-known local desktop approach toward applications that are hosted via the Internet. For purpose of the instant application, the term "hosted form" will be used to describe the provision of software to the user via the Internet, wherein the software is stored on a server . This model relieves the user of the constraints imposed by a local, static desktop, and instead places the user in an environment where he or she is no longer bound by desktop specific usage rules.

A logical next step in this process has been the development of so called web-tops or web-desktops. Web-desktops represent the online form of the standard computer desktop that the user is already familiar with and typically feature well-known functions that are available within the standard desktop such as a mouse-based user interface, and access tofamiliar software applications (e.g., calculator, email, word processing, media player), etc. Web-desktops utilize the familiar "desktop" metaphor as a means of allowing a user to access the Internet. The advantage of this approach is that it combines currently available applications and products with a familiar graphical user interface. Thus, this approach combines the features of the Internet (including the hosted applications) with applications that are generally desktop-based local applications. Additionally, this approach makes available functions which are associated with online activity such as instant messaging, chat, file sharing, the processing and sharing of multimedia data, etc.

Multimedia data, and applications for creating and processing same, are becoming increasingly prevalent. The reasons for the increased use and availability of multimedia data are numerous but hardware developments are a major contributing factor. Digital cameras, digital videocameras, mobile phones with digital cameras and mobile music players all provide increased opportunities for the user to create and consume a vast amount of digital multimedia data. Improved connectivity to the Internet and coupled with the ready availability of hardware have helped fuel the boom in processing and presentation of multimedia data.

In any case, today the Internet is a major entry point into a multimedia ecosystem, with websites for video, digital photos, music readily available by the user.These sorts of websites can perform many functions for the user, from simple viewing of multimedia material to creating, managing and presenting existing content, etc. There are many online websites or services that offer, for example, photo sharing and management of user-originated digital information, e.g., for photo printing, video sharing, website creation and music evaluation, etc. However, these sorts of services require the user to provide login information as a prerequisite to obtaining service. Additionally, after login, a strict and complex protocol must be thereafter followed before a user can utilize that functionality. For example, consider the case where the user wishes to publish digital photos via an online photo sharing service. He or she will typically have to execute some or all of the following steps:
• Select an online service;
• Select the digital photos that are to be published;
• Edit the selected digital photos (if that has not been done already), which might include cropping, scaling, addition of effects, adjusting the contrast settings or brightness settings, etc.;
• Change the image format or resolution/size if the selected online service requires it (e.g., the images might be stored on the user's computer as a JPEG file, whereas the online service requires TIF);
• Upload the properly sized and formatted images to the service.

Those of ordinary skill in the art will recognize that a similar series of steps may be necessary when accessing a video sharing site, photoprinting service, etc.

The large number of online services, each of which requires its own individualized protocol, and the large number of steps that are required in order to utilize each service tend to make the process strenous and difficult for the user. Additionally, if multiple files are to be submitted it may be necessary to repeat some or all of the above-identified steps for each individual file.

Thus, what is needed is a method that eliminates the above described problems, which features an approach that allows the user to quickly generate automated processes which allow the user to reduce the effort required to publish or process multimedia data over the Internet.

Accordingly it should now be recognized, as was recognized by the present inventors, that there exists, and has existed for some time, a very real need for a system and method that would address and solve the above-described problems.

Before proceeding to a description of the present invention, however it should be noted and remembered that the description of the invention which follows, together with the accompanying drawings, should not be construed as limiting the invention to the examples (or preferred embodiments) shown and described. This is so because those skilled in the art to which the invention pertains will be able to devise other forms of the invention within the ambit of the appended claims.

### SUMMARY OF THE INVENTION

There is provided herein a system and method for the creation of automated content dependent procedures in an online environment, wherein in the preferred embodiment the online environment will consist of one or more Internet based web-desktops which operate over the Internet. In the preferred embodiment, the instant invention provides a user with a method of quickly defining a sequence of actions/editing operations and selecting an arbitrary number of individual online services for the processing/distribution of digital data files. The process preferably is controlled via a graphical user interface wherein the component parts of the interface will vary depending on the selected type of data file. The instant system preferably allows the user to quickly create pre-defined workflows regarding the transmission and use of different data file types.This will enable the user to specify the series of steps that are required to publish a specific data file. The instant method will further allow the user to automate the required steps in case the user wishes to publish additional files. In a preferred arrangement, the user will only be provided with program options that are specific to the selected data file type. Through the use of such a graphical user interface, the user will be able to create individual representations of automated procedures for individual data file types. The system is designed to help the user cope with a wide variety of multimedia files and data file types and to help cope with the great number of available online services and the different operational requirements of each of these online services.

In brief, the instant invention will allow a user to create automated content dependent procedures via the web-desktop or other operating system interfaces. The instant invention will preferably be provided to the user in the form of a computer program (web-desktop) that has a graphical user interface which is content dependent. For purposes of the instant disclosure, "content dependent" will mean that the executing software provides individualized procedures for different data file types. It should be noted that the instant invention is not limited in its use to any specific data file type. However, the instant invention is ideally suited for use with multimedia data.

In a preferred arrangement, the user-created procedures will comprise a mixture of actions and editing operations that are to be performed upon the selected data file type. The procedures might additionally implement tasks related to the functionality of each online service. The preferred graphical user interface will provide options that are presented to the user depending on the input data file type. The user will preferably not be limited to the selection of only one action and/or editing operation, instead he or she will preferably be able to select an arbitrary number of operations. Similarly, the user will preferably not be limited to the selection of only one online service.

The information that uniquely identifies a user to an Internet site (e.g. logon information) and other sorts of information that is unique to an online service will preferably be provided automatically by the instant invention through a contact module of the sort typically provided by a web-desktop. The management of the web-desktop and the graphical user interface of the instant invention will preferably be carried out by a server that also manages the user accounts of the individual users of the web-desktop and that server also provides storage space as requested.

The instant invention features an efficient approach to the problem of managing many different data files in an online environment and additionally features a preferred solution to the problem of distributing individual data files between multiple online services. The end product of the instant invention, as well as the content of various graphical user interface menus, will be content dependent. That is, depending on the selected input file type, the instant invention provides the user withdifferent editing operations specifically directed to the selected data file type. Similarly, the options associated with each online service will be customized for that service and will be selected according to the data file type.

According to a first preferred embodiment, the instant invention will begin by requiring the user to login to a web-desktop. This will preferably be accomplished by using a generic Internet browsing application (e.g., a browser hereinafter). The user will preferably be asked to login by providing a login name and password as is conveniently done. After a successful login, the instant invention will preferably provide the browser with the information necessary to display the web-desktop. In the next preferred step, the user will activate a file management module that allows the user to select an input data file. After one or more data files have been selected, the instant invention preferably provides the user with menu options related to the creation of an automated procedure. In some preferred embodiments, this program option will be displayed. in the context menu of the file management module besides generic file management options like "open", "view", "copy" and "delete".

In a next preferred step, after selection of the "create automated procedure" option the instant invention will provide the user with a graphical user interface that varies depending on the elected input file type. The graphical user interface will preferably offer two different selection options. A first preferred menu option will allow the user to choose actions or editing operations that are to be executed on the input data file. A second option will preferably allow the user to select an online service to which he or she wants to distribute input data file. The main components of the instant invention will preferably be presented to the user as options within the graphical user interface, . The data (e.g., icons) that fillsthe individual sections of the graphical user interface will preferably be provided by the server that controls the web-desktop environment. Preferably, the on-screen data and operating information will be continually updated to keep the instant invention up to date with technological developments. Updates that are designed to accommodate new or changed options within an online service will preferably be provided by the instant inventors and might be distributed via the Internet or other communication networks.

As a next preferred step the user will preferably define the editing operations or other actions that he or she wants to incorporate into the automated procedure for subsequent operations on the data files of the same file type. The editing operations, however, will preferably not be executed immediately, but rather will be stored within the server as part of an automated content dependent procedure. The instant invention preferably collects login and other information from the user as the actions are specified and stores it either as part of a graphical object representing the automated procedure or internally as part of a future context menu of the web-desktop. If the user has finished specifying the desired editing operations, he or she will preferably indicate that fact and the instant invention will then switch the graphical user interface to a selection menu that contains a list of the online services. As previously mentioned, the type of the input data file will be used to determine which online services will be displayed.

In a next preferred step, the user will preferably select the online service or services which he or she wants to use when, for example, automatically processing data files of the same type as that of the input file. That selection will then preferably be transferred to the server and the server will store the transmitted information. Additionally, the instant invention will preferably collect login data for the selected online service or services from a login data module that runs within web-desktop. , Preferably this module will accumulate login information for each online service available for selection. The instant invention will preferably store the login data for the online services together with the information about the selected online services.

After the user has selected the online services, he or she will preferably indicate that fact via the graphical user interface and the instant invention will then create a graphical object on the web-desktop of the user. This object will contain or point to information about the input file type, the desired editing operations and the online services to which a file of the same file type is to be distributed (including if necessary, the appropriate login user's name and password). The instant automated content dependent procedure will preferably be visually represented by such a graphical object on the user's desktop. Additionally, the instant invention will preferably allow the user to opt for an integration of the procedure into the context menu of the web-desktop environment. The visual representation of the graphical object will preferably be changeable by the user. The object may be an icon or a simple graphical object resembling a box, wherein the user will be able to drop data files of the same file type.

Afterwards the user will preferably be able to execute the automated procedures type by simply moving individual files of the appropriate type to the graphical object or by selecting a menu option from the context menu. The designated procedure will then be carried out automatically and preferably without any notification to the user, except possibly for some sort of notice that the automated process has been successfully completed. Of course, if errors occur during execution of the individual operations, the user will preferably also be informed of that fact. In such a case, the user will preferably be able to open the previously created graphical object and diagnose/repair the condition that resulted in the errors or remove the operations or online services that gave rise to them. As an example, an error might be generated if a particular online service is no longer available.

It should be clear that an approach such as this would be a tremendous aid to the user of a web-desktop or other application who wants to quickly and easily process one or more different data files. The instant invention provides the user with a method of easily defining automated content dependent procedures by using an approach that is driven by a graphical user interface whose content is dependent on the file type of the selected input data file. The method and system greatly simplifies the processing of multiple files of the same file type by providing the user with a graphical object or entry in the context menu of the user environment that defines the editing instructions, the desired online services, and the necessary login information for the online service. The editing instructions, the connection to the online server, and the functions connected with the online server will preferably be executed automatically.

The instant method features an approach that allows the user to quickly generate processes which automate publication of multimedia data over the Internet. Tasks that took many steps previously may be accomplished in as few as two. The method features a content dependent approach. That is, after the input file has been selected - the actions that follow or are selectable will vary depending on the file type. The user will be guided by the graphical user interface of the instant invention through the whole process, wherein the menu options are provided automatically and according to the file type of the input data file. The user will select the editing actions/operations and the online services where they will be executed. Given these choices, the instant invention will then preferably provide the user with a customized graphical object or an addition to a menu of the web-desktop environment.

The instant invention is designed to relieve the user of the problems typically encountered when coping with multiple multimedia files in different formats which are to be distributed tomultiple web sites for printing, processing, etc. The instant invention is designed to assist the user by helping him or her negotiate the various web sites that are designed to process multimedia data.

The foregoing has outlined in broad terms the more important features of the invention disclosed herein, so that the detailed description that follows may be more clearly understood, and so that the contribution of the instant inventors to the art may be better appreciated. The instant invention is not limited in its application to the details of the construction and to the arrangements of the components set forth in the following description or illustrated in the drawings. Rather the invention is capable of other embodiments and of being practiced and carried out in various other ways not specifically enumerated herein. Additionally, the disclosure that follows is intended to apply to all alternatives, modifications and equivalents as may be included within the spirit and the scope of the invention as defined by the appended claims. Further, it should be understood that the phraseology and terminology employed herein are for the purpose of description and should not be regarded as limiting, unless the specification specifically so limits the invention.

### BRIEF DESCRIPTION OF THE DRAWINGS

Other objects and advantages of the invention will become apparent upon reading the following detailed description and upon reference to the drawings in which:

Figure **1** depicts the general working environment of the instant invention.

Figure **2** illustrates some key components of the instant invention and the communication links between thesecomponents.

Figure **3** illustrates the graphical user interface of a typical web-desktop according to the instant invention as it might appear in a first phase.

Figure **4** depicts a preferred graphical user interface of the instant invention as it might appear in a second phase.

Figure **5** illustrates a preferred graphical user interface of the instant invention in a third phase.

Figure **6** illustrates a preferred graphical user interface of the instant invention in a fourth phase.

Figure **7** contains a schematic illustration of some actions that are sourced from the automated process in the online environment.

Figure **8** illustrates a preferred data flow between two participating components according to the instant invention.

Figure **9** depicts a preferred data content of an automated procedure that was produced according to the instant invention.

Figure **10** depicts a preferred flowchart of the instant invention.

### DESCRIPTION OF THE PREFERRED EMBODIMENTS

Referring now to the drawings, wherein the reference numerals indicate the same parts throughout the several views, there is provided a system and method for the creation of automated content dependent procedures in an online environment. The instant invention will preferably enable the user to create automated procedures by using a graphical user interface, with the contents and selectable options displayed in the graphical user interface being also content dependent. By creating this automated procedures the instant invention allows the user to automatically initiate preselected actions, (including editing operations) and actions relating to the use of online services.

By way of general explanation and in accord with the preferred embodiment, it is to be understood that when the phrase "creation of automated content dependent procedures" is used herein that usage will preferably be interpreted as providing a step-wise process that allows a user to construct an executable procedure that is customized depending on the input file type(s) and that automates the user's interaction with one or more Internet-based services. The nature of the interaction will depend on what sort of information and / or data (e.g., digital photo, video, etc.) is to be transferred to the service. Preferably, the automated procedure will be customized to match the selected file type. Additionally, by executing a procedure of this sort, the user will be able to initiate automatic processing of specific file types quickly and efficiently.

For purposes of the instant embodiment it should be understood that the invention preferably seeks to provide a process by which a user can create automated procedures that are appropriate for each sort of supported file type. The instant invention preferably provides the user with a graphical user interface containing selection options for editing operations/actions and specific online services - wherein the selection options are specifically associated with a file type. The user interaction will preferably be implemented as a step-wise process providing the user with the necessary options to efficiently create the automated procedure. The automated procedure might be, for example, integrated into the working environment of the web-desktop as a selectable command or as a graphical object.

Broadly speaking, the sorts of step that will preferably be automated include specification of editing operations or actions which are designed to be applied to files of a particular type, login at a remote site (including password, if required), and transmission of the files to the remote site for processing there. By completing the process of the instant invention, the user will be able to create an automated procedure whose instructions are preferably stored within the web-desktop environment and will be automatically executed in the same order as the events that have been specified previously by the user. The preferred workflows and additional specifications regarding the instant invention will be described in more detail below.

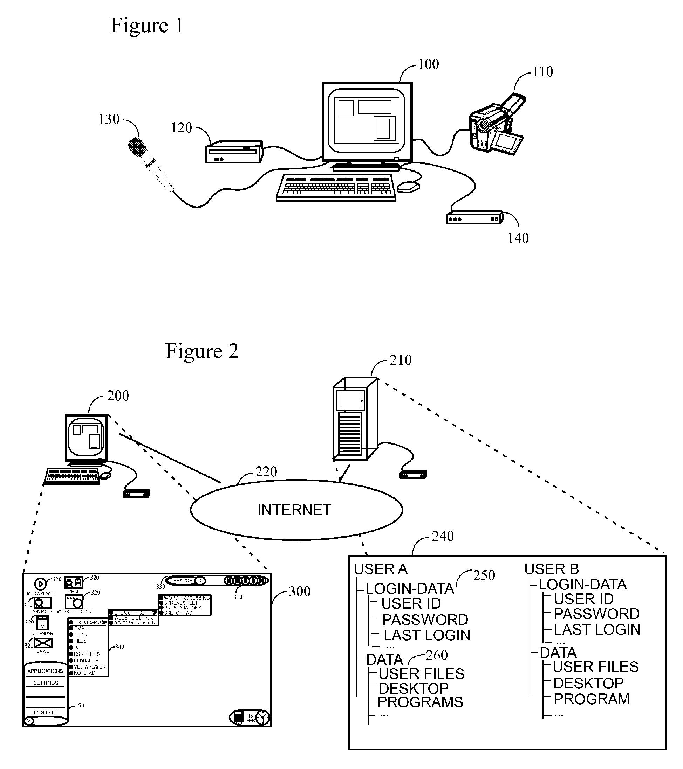

As is generally indicated in Figure **1**, at least a portion of the instant invention will be implemented in form of software running on a users computer **100**. Such a computer will have some amount of program memory and hard disc storage (whether internal or accessible via a network) as is conventionally utilized by such units. Additionally it is possible that an external camera **110** of some sort be utilized with - and will preferably be connectible to the computer so that video and/or graphic information can be transferred to and from the computer. Preferably the camera **110** will be a digital video camera, although that is not a requirement, as it is contemplated that the user might wish to utilize still images from a digital still camera in the creation of his or her multimedia work. Further given the modern trend toward incorporation of cameras into other electronic components (e.g. in handheld computers, telephones, laptops, etc.) those of ordinary skill in the art will recognize that the camera might be integrated into the computer or some other electronic device and, thus, might not be a traditional single-purposes video or still camera. Although the camera will preferably be digital in nature, any sort of camera might be used, provided that the proper interfacing between it and the computer is utilized. Additionally a microphone **130** might be utilized so that the user can add voice-over narration to a specific multimedia work or can control his or her computer via voice-recognition software and additionally a CD or DVD burner **120** could be useful for storing content on writable or rewritable media. Additionally to that an Internet access device **140**, preferably a router, will be connected to the networking card contained in the computer to allow the user to get access to the Internet.

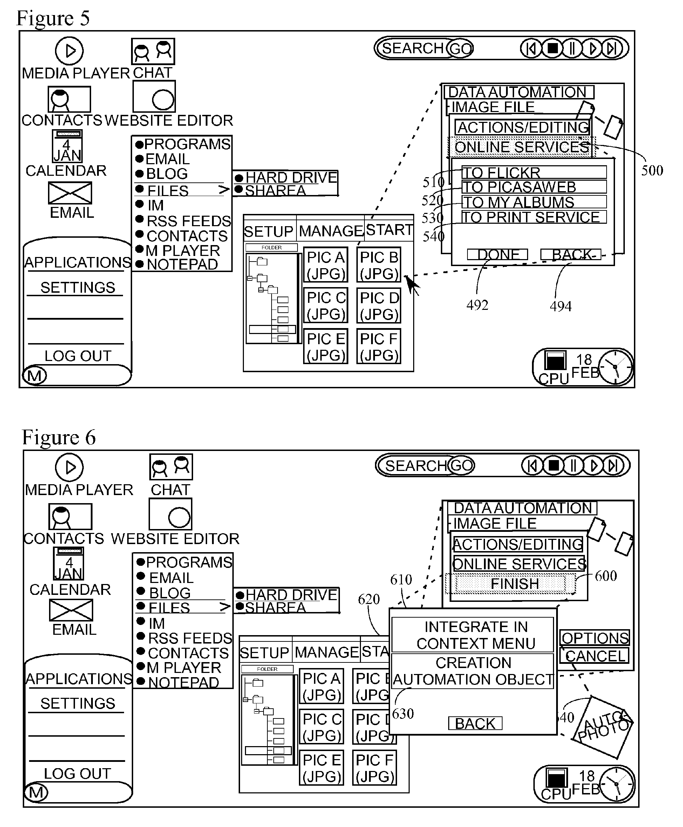

Turning next to Figure **2**, this figure illustrates typical participating entities in an Internet-based web-desktop environment. As is indicated in that figure, a local desktop computer **200** is connected to the Internet **220** via, for example dial-up, landline broadband (over coaxial cable, fibre optic or copper wires), Wi-Fi or satellite connection, etc.. Although only a single desktop computer **200** is illustrated in Figure **5**, is should be understood that many different desktop's and/or laptops, etc., could be simultaneously performing the steps of the instant method.

In a preferred embodiment, the computer will connect to a server **210** which is also connected to the Internet. As part of the process of connecting to the server, the user will typically be required to authenticate himself or herself with the server **210** and the server **210** will preferably provide the web-desktop graphical user interface **230** to the user,. The server **210** will preferably manage and control the web-desktop (or other application) environment, which is an important aspect of the functionality of the instant invention. The server **210** will preferably store the login data **250** of each user which will typically be comprised of passwords and user ids or similar user identification. Additionally, the server **210** might store other user-based information such as the last login date, and time of the last login to the web-desktop, etc. Additionally, it should be noted that the illustration and display of one computer in Figure **2** is not meant to indicate a "one computer = one user" limitation of the instant invention. This illustration is mainly used to visually suggest a general method of accessing the web-desktop. Those of ordinary skill in the art will recognize that it is certainly possible that many users will be able to login from a single computer or from many different computers that are connected to the Internet.

Additionally, in a preferred arrangement the server **210** will store user-based data **260**, for example user files, which might be text documents, digital image files, video clips or audio files, etc. Further the server could also store settings related to the web-desktop of the user, such as , for example, the on-screen location of individual icons or the specifications of information feeds from the Internet. The server might also store data related to program settings, for example login data for different Internet-based services. Among the services that are suitable for use with the instant invention are email services, photo sharing services, file sharing environments in the Internet, etc.

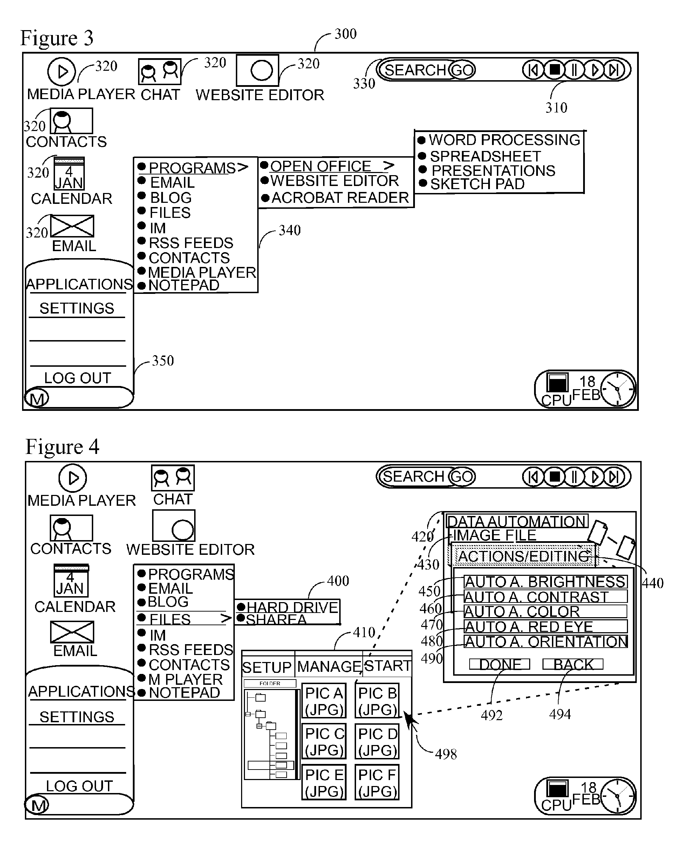

As is generally suggested in Figure **3**, in a preferred embodiment a user of the instant invention will be presented with a computer screen display **300**. This figure illustrates how a a web-desktop might appear. Note that the layout of web-desktops in general is similar to the visual layout of standard local desktops as they appear in current operating systems. Returning now to the description of Figure **3**, the web-desktop might provide controls for the playback of multimedia content **310** to the user. In addition, the user will preferably be provided with selectable icons **320** which represent a variety of different applications of the sort that are typically associated with web desktops .

**Of course,** many applications could be offered as an adjunct to the instant invention. For example, the instant invention could provide a mediaplayer application,a website editor application, a contacts application (wherein personal information of friends and colleagues may be stored), etc.. Additional applications might include an email application, a chat application, a calendar application, etc.. Of course, the previous listing of applications are not in any way intended to limit the number of applications that might be available in a web-desktop environment. It should be clear to someone of ordinary skill in the art that there are a vast number of possible applications that might be used within the constraints of a web-desktop environment. Further, the user might be provided with an easy access point to an Internet search engine **330**. Finally, the web-desktop might contain menu items that permit access to other applications **340** and that allow a user to configure the web-desktop **350** environment.

Turning next to Figure **4**, this figure illustrates how the screen of Figure **3** might appear after the user has initiated the process of the instant invention by selecting an image file. The activities regarding the instant invention will preferably be executed within the confinements of a user's web-desktop **300.** The user starts the preferred process by selecting a file via a file management application **410** of the web-desktopwhich allows the the user to browse a local or remote hard drive **400.** After the user has selected a file, the instant invention will preferably automatically determine its file type and open the graphical user interface for the creation of the automated procedure **420.** In some preferred embodiments, the automation window **420** will be activated via selection of an appropriate menu item. Preferably, the graphical user interface will indicate the content type of the selected file **430** and will display a menu to the userthat includes appropriate action steps that can be applied to that file type.

Next, the user will preferably select the operations **440** that he or she wants to apply to the selected file(s), , image files in the example of Figure 4. The instant invention will preferably display a selectable list of editing operations appropriate for use with the selected file type. By way of example only, when an image file is selected the available actions might be to automatically adjust the contrast **450** of that file, to automatically adjust the brightness **460** of that file, to automatically adjust the color **470** of that file, to automatically fix red eye **480** problems of that file, to automatically adjust the orientation **490** of that file, etc. Preferably, the user will not be forced to select any particular operation. In fact he or she might elect not to use any of the editing operations. However, the user might also be allowed to select multiple editing operations.

If the user is satisfied with his or her selection, he or she will preferably be permitted to jump to the next entry in the selection menu by signaling this to the graphical user interface (e.g., by selecting the "done" **492** option). Additionally, if the user decides to stop the creation process,that could be accomplished by selecting the "back" **494** user control.

Turning next to Figure **5**, this figure illustrates the appearance of a preferred web-desktop of the instant invention after the user has indicated that no more actions are to be added. Preferably, the graphical user interface of the instant invention will automatically activate the next menu, which will allow the user to select online services **500** associated with the selected file type (e.g., online services associated with image files in this figure). The instant invention will preferably automatically populate the menu with the appropriate options. The user will preferably be allowed to select a single online service, multiple online services or no online service at all. In the current example, the user is able to choose between the automatic distribution of image files to Flickr **510**, Picasaweb **520**, an online photo album **530** and/or to an online photo print service **540**. The user will preferably be able to signify completion via the "done" user control **492.** However, if the user wants to return to the step of defining individual editing operations, he or she can do so by activating the "back" user control **494**. The instant invention preferably dynamically stores each user's selection during the creation process until the user notifies the instant invention that that process is complete.

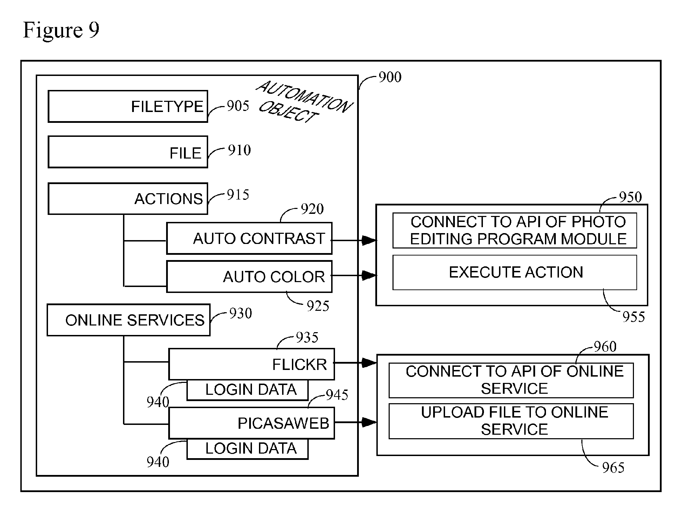

Figure **6** illustrates a preferred last step in the creation process. After the user selects of the online services, the graphical user interface will preferably switch to the next step which is the creation of the automated procedure. The user will preferably be informed of the step via the graphical user interface and be given an opportunity to select how the procedure is to be created. The user will preferably have the option to integrate the procedure **610** into the web-desktop menu or to create a graphical automation object **620**. The "back" user control sends the user back to the previous step of the creation process. If the user decides to create a graphical automation object the instant invention might create such an object, and place it automatically onto the web-desktop **640**. The description of the data content and structure of this automated procedure is discussed below in connection with the description of Figure **9**. If the user chooses to integrate this procedure into the context menu, the settings of the web-desktop will be changed accordingly and the automated procedure will be added to the context menu. Thus, this procedure will be available when the user selects a file of the file type for which the automated procedure has been created.

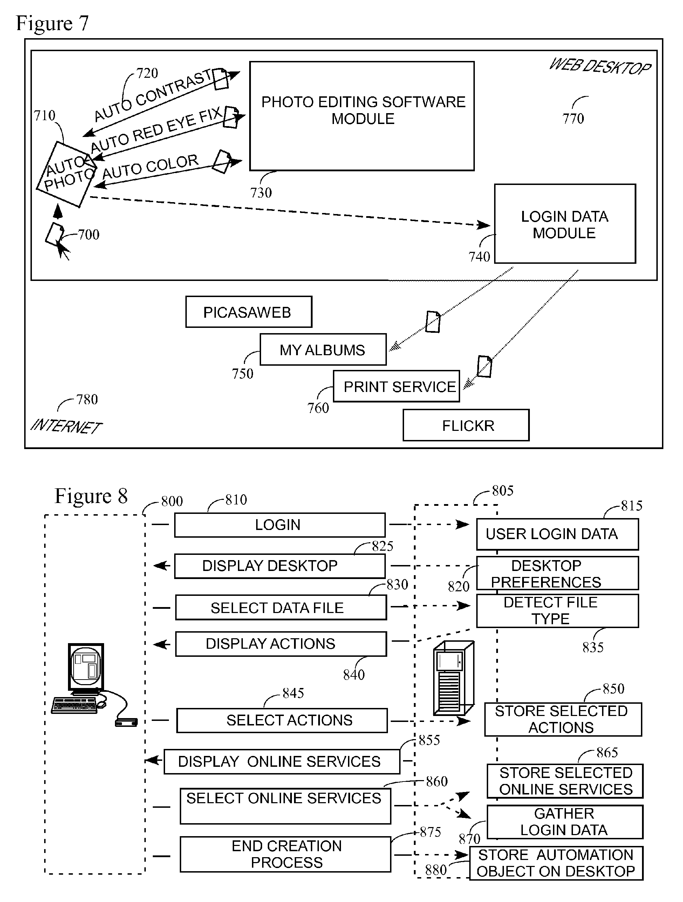

Now turning to Figure 7, this figure illustrates in a general way the flow of data and data files that takes place when executing an automated procedure created by the instant invention. As is generally indicated in this figure, in this embodiment the user will select a graphical representation of a data file of a particular file type **700**. Preferably, the user will use mouse and keyboard to move the data file onto the graphical object that represents the automated procedure. In the current example, automated procedure contains instructions to automatically correct contrast, color and red eye problems **720** in any digital image file that is used with the automated procedure. In this case, the automated procedure connects to a digital photo editing module **730** via the web-desktop and initiates the previously defined editing operations.

With respect to the online services, the automated procedure preferably connects to a login data module **740** of the web-desktop and gathers the login data for the selected online services. This data gathering can also be initiated dynamically from within an automated procedure, but it might also be the case that the necessary login information will be stored along with the editing operations or online services. In the present example, the automated procedure will utilize two online services, the online photo album **750** and the photo print service **760**. The instant procedure will automatically log in and distribute the selected data file to these services. The actions illustrated in Figure **7** are customized to show what an automated procedure might look like for a digital photo file. Of course, the instant invention is not limited to processing images files. Adigital photo file is used only for purpose of illustration. As another example, a text document could be subjected to a a grammar check and the online service might be the business document server to which the document is transferred. Regarding digital music files and digital video files, similar automated procedures are also possible.

Figure **8** illustrates a preferred data flow between a user's computer that hosts the web-desktop **800** and the server **805** that manages the web-desktop environment. In a preferred arrangement, the user will log in to the web-server **810** using his or her login data, which will preferably be stored within the server **815** and where the entered login data is compared to the stored login data. The server will preferably load the user's desktop preferences (icon placement, definition of feeds, etc.) **820** and these preferences will then be applied to the display of the web-desktop **825** on the user side. In the next step, the user will select a data file of a certain file type **830** and the instant invention will detect that file type (step **835**).

Given the file type, the instant invention will preferably display the graphical user interface associated with that type of file. Preferably, a first selection menu will display a number of editing operations **840** associated with the selected file type. The user will select the actions that he or she wants to incorporate into the automated procedure **845** and the server will preferably automatically store the selections **850.** If the user signals that the selection process is complete, the instant invention will preferably display the selectable online services **855.** The user will select the desired online services **860** and the instant invention will preferably dynamically store the selection within the server **865**. The necessary login data **870** will preferably be obtained from a login data module desktop and this information will also preferably be stored dynamically. If the user signals that the creation process is ended **875**, the instant invention will preferably store the automation object on the web-desktop of the user and integrate the dynamically stored data into that graphic automation object **880** or into the context menu of the web-desktop environment.

Now turning to Figure **9****,** this figure illustrates the preferred data content of an automated procedure **900,** and the preferred actions executed or initiated thereby. The automated procedure will preferably contain an indication of the file type **905** for which the automated procedure has been created. Additionally, at run time , the procedure will also contain information about the file that is to be processed 910 (e.g., a file name). Additionally, the procedure **900** will preferably have a section that contains the actions or editing operations **915,** which in the present example include instructions to initiate an automatic correction of contrast **920** and color **925**. The automated procedure will also preferably contain a data section that contains information related to the online services **930**. The online services in the present example contain instructions to distribute the selected file to two different online services, Flickr^{®} **935** and Picasaweb^{®} **945.** In a preferred arrangement, the login data **940** for both online services will be stored together with the instructions for connecting thereto (e.g., a URL and a login sequence). The steps associated with the execution of the desired actions and selected online services are also illustrated in Figure **9**. In this example, the instant invention connects to the API of the photo editing program module integrated into the web-desktop **950** and initiates the desired editing operation **955.** The order of the steps that one performed when implementing the actions in connection with the online services is similar. The instant invention preferably connects to the API of the online services **960** using the login data provided. Then, continuing with the example of Figure **9**, the currently selected file will be uploaded to the online services 965.

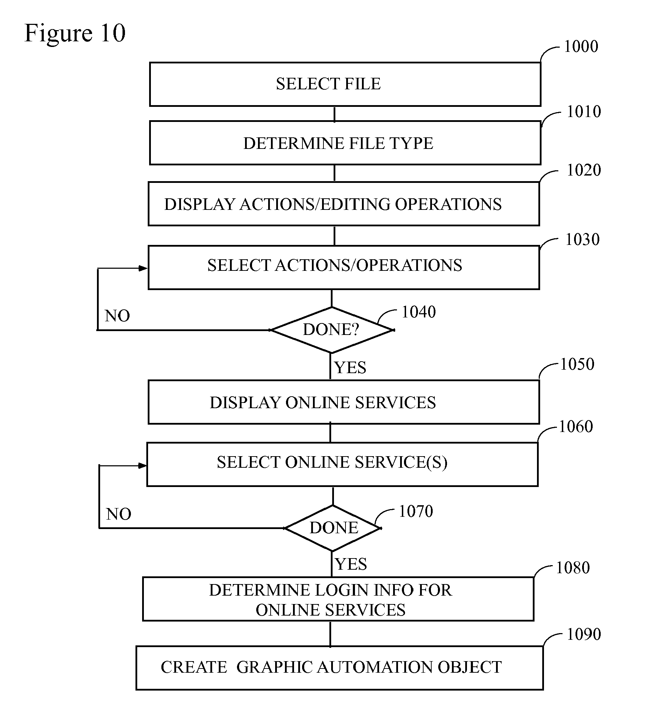

Figure **10** contains a preferred workflow of the instant invention. As a first preferred step the user, who has which is already logged in to his or her web-desktop, selects a file **1000** that is accessible via his web-desktop. It should be noted that, although the preferred embodiment begins by selecting a particular computer file (step **1000**) which is to be subsequently processed, this step is not strictly required and the instant method could very well have begun with the selection of a file type (step **1010**). What is important for the steps that follow step **1000** is knowledge of the file type and that information standing alone (i.e., without being associated with a particular file) is sufficient in some embodiments to create an automated procedure.

In the next preferred step, the instant invention determines the file type of the selected file **1010**. Those of ordinary skill in the art will recognize that any computer file type might potentially be used in connection with the instant invention. For example, and not by way of limitation, graphics file types (e.g., JPEG, TIFF, BMP, etc.), video file types (e.g., AVI, MPEG, etc.), audio file types (e.g., MP3, WAV, etc.), word processing file types (DOC, WP, TXT, RTF, etc.), spreadsheet file types (e.g., XLS) could all potentially be used depending on the needs of the user and the services available.

Next, the instant method will preferably ask the user to select from a compiled list of the editing operations and/or actions **1020** associated with the selected file type. Obviously, and as has been discussed previously, the list of applicable actions and editing operations (collectively "operations", hereinafter) that will be presented to the user will be dependent on the type of file that has been selected. Note that among the operations that might be selected (in addition to file type-specific editing operations) include upload, download, copy, delete, etc.

In a preferred next step, the user will preferably define and select actions/editing operations from the list **1030**. As has been discussed previously, the operations that will be offered depend on the type of file that has been selected. For example, if the selected file type is a graphics file, operations such as resizing, color correcting / enhancing, resolution change, color printing, posting on the Internet (e.g., via Flikr and similar image posting sites), format change (e.g., JPEG to TIFF), etc., might all be potential operation candidates. If the file type is video, the operations could include functions such as color balancing, audio levelling (i.e., reducing the dynamic range of the audio track), resolution change (increase or decrease), format change (e.g., to/from NTSC to HD), etc. If the file type is word processing the operations could include such functions as printing, grammar / spell checking, etc.

This processing being continued until the user is satisfied with his or her selection 1040.

In the next step, the instant invention will preferably display one or more online services to the user **1050**, wherein the online services will also be presented according to the defined file type. The user will then select the desired online services **1060** until he or she completes the selection **1070** process. The necessary login data for each of the selected online services will preferably be read (if it was stored previously) or acquired from the user. Additionally, the menu choices and other options utilized by the selected service will need to be read (if these options were stored previously), downloaded (e.g., from a service that provides regularly updated syntax information for a service, downloaded the service itself, etc.) or acquired from the user (by, for example, watching the user while he or she completes a transaction of the type contemplated) (step **1080**). For purposes of the instant disclosure, the "protocol" of a service will refer to a service's login procedure (if any) and its internal menu structure, which will likely differ depending on the file type that is to be processed.. In the last preferred step, the instant invention will preferably create a graphic object representing the automated content dependent procedure **1090**.

### CONCLUSIONS

Of course, many modifications and extensions could be made to the instant invention by those of ordinary skill in the art. For example in one preferred embodiment it will be possible to combine the individual file type dependent steps and selections in one graphic object, which, for example, automatically processes digital photo and digital video files or creates a video file from multiple digital photo files. Additionally, it might be possible to implement a multi-user approach, which automatically notifies entries in the contact database which have been related by the user.

Thus, the present invention is well adapted to carry out the objects and attain the ends and advantages mentioned above as well as those inherent therein. While the inventive device has been described and illustrated herein by reference to certain preferred embodiments in relation to the drawings attached thereto, various changes and further modifications, apart from those shown or suggested herein, may be made therein by those skilled in the art, without departing from the spirit of the inventive concept the scope of which is to be determined by the following claims.

## Claims

1. A method of automating a transaction with a website, wherein are provided a plurality of service websites accessible via the Internet, each of said service websites having a protocol associated therewith, and each of said service websites accepting at least one digital file type via the Internet and acting thereon, comprising the steps of:
(a) establishing a network connection between a computer and a remote server, said remote server at least for hosting a web desktop;
(b) displaying said web desktop on a display device, said display device being in electronic communication with said computer;
(c) selecting a computer file type;
(d) determining at least one operation applicable to said computer file type;
(e) choosing at least one operation from said at least one operation applicable to said computer file type;
(f) using at least said computer file type to choose a service website, wherein said chosen service website can perform at least said chosen at least one operation;
(g) choosing a service website;
(h) obtaining a chosen protocol for said chosen service website;
(i) storing on a computer readable medium a representation of said selected computer file type, a representation of said chosen at least one operation, a representation of said chosen service website, and a representation of said chosen protocol for said chosen service website, thereby storing a content dependent procedure;
(j) storing on said web desktop an automation icon representative of said stored content dependent procedure, thereby automating a transaction with said chosen service website; and,
(k) displaying on said display device said web desktop and said automation icon.

2. A method of automating a transaction with a website according to Claim **1**, wherein step (c) comprises the steps of:
(c1) selecting a first computer file, and,
(c2) determining a file type of said first computer file, thereby selecting a computer file type.

3. A method of automating a transaction with a website according to Claim **1**, further comprising the step of:
(l) selecting a second computer file, wherein said second computer file has a same file type as said computer file type;
(m) establishing a network connection with said chosen service website; and,
(n) using said automation icon together with said second computer file to activate said stored content dependent procedure, thereby using said protocol with said chosen service website to perform said chosen at least one operation on said second computer file.

4. A method of automating a transaction with a website according to Claim **3**, wherein step (n) comprises the step of:
(n1) selecting an icon representative of said second computer file,
(n2) within said web desktop, dragging said icon representative of said second computer file proximate to said automation icon,
(n3) dropping said icon representative of said second computer file on said automation icon, thereby activating said stored content dependent procedure and using said protocol with said chosen service website to perform said chosen at least one operation on said second computer file.

5. A method of automating a transaction with a remote website according to Claim **1**, wherein said computer file type is selected from a group consisting of a graphic file type, a video file type, an audio file type, a word processing file type, and a spreadsheet file type.

6. A method of automating a transaction with a remote website according to Claim **5**, wherein said computer file type is said graphic file type and wherein said chosen at least one operation of step (e) is selected from a group consisting of a resolution change operation, a resize operation, an auto contrast operation, an auto red eye removal operation, and an auto color operation.

7. A method of automating a transaction with a remote website according to Claim **1**, wherein said chosen protocol for said chosen website comprises a login name, a password, and a menu structure of said chosen website.

8. A method of automating a transaction with a remote website according to Claim **1**, wherein step (i) comprises the step of:
(i1) storing on said remote server a representation of said selected computer file type, a representation of said chosen at least one operation, a representation of said chosen service website, and a representation of said chosen protocol for said chosen service website, thereby storing a content dependent procedure; and,

9. A method of automating a transaction with a plurality of websites, wherein are provided a plurality of service websites accessible via the Internet, each of said service websites having a protocol associated therewith, and each of said service websites accepting at least one digital file type via the Internet and acting thereon, comprising the steps of:
(a) establishing a first network connection between a computer and a remote server, said remote server at least for hosting a web desktop;
(b) displaying said web desktop on a display device, said display device being in electronic communication with said computer;
(c) selecting a computer file type;
(d) determining at least one operation applicable to said computer file type;
(e) choosing at least one operation from said at least one operation applicable to said computer file type;
(f) using at least said computer file type to select a plurality of service websites, wherein each of said selected plurality of websites can at least perform said chosen at least one operation;
(g) choosing a plurality of service websites from among said selected plurality of service websites;
(h) obtaining a chosen protocol for each of said chosen plurality of service websites;
(i) storing on a computer readable medium a representation of said selected computer file type, a representation of said chosen at least one operation, a representation of said chosen plurality of service websites, and a representation of said chosen protocol for each of said chosen plurality of service websites, thereby storing a content dependent procedure; and,
(j) storing on said web desktop an automation icon representative of said stored content dependent procedure, thereby automating a transaction with said chosen service website; and,
(k) displaying said automation icon and said web desktop on said display device.

10. A method of automating a transaction with a website according to Claim **9**, wherein step (c) comprises the steps of:
(c1) selecting a first computer file, and,
(c2) determining a file type of said first computer file, thereby selecting a computer file type.

11. A method of automating a transaction with a website according to Claim **9**, further comprising the step of:
(l) selecting a second computer file, wherein said second computer file has a same file type as said computer file type;
(m) establishing a network connection with said chosen service website; and,
(n) using said automation icon together with said second computer file to activate said stored content dependent procedure, thereby using said chosen protocol for each of said chosen plurality of service websites to perform said chosen at least one operation on said second computer file.

12. A method of automating a transaction with a website according to Claim **11**, wherein step (n) comprises the step of:
(n1) selecting an icon representative of said second computer file,
(n2) within said desktop, dragging said icon representative of said second computer file proximate to said automation icon,
(n3) dropping said icon representative of said second computer file on said automation icon, thereby activating said stored content dependent procedure, and thereby using said chosen protocol for each of said chosen plurality of service websites to perform said chosen at least one operation on said second computer file.

13. A method of automating a transaction with a remote website according to Claim **9**, wherein said computer file type is selected from a group consisting of a graphic file type, a video file type, an audio file type, a word processing file type, and a spreadsheet file type.

14. A method of automating a transaction with a remote website according to Claim **13**, wherein said computer file type is said graphic file type and wherein chosen at least one operation of step (e) is selected from a group consisting of a resolution change operation, a resize operation, an auto contrast operation, an auto red eye removal operation, and an auto color operation.

15. A method of automating a transaction with a remote website according to Claim **9**, wherein said chosen protocol for said chosen website comprises a login name, a password, a menu structure of said chosen website.

16. A method of creating automated procedures for publication of multimedia data over the Internet, comprising the steps of:
(a) establishing a network connection between a computer and a remote server, said remote server at least for hosting a web desktop;
(b) displaying said web desktop on a first display device, said display device being in electronic communication with said computer;
(c) selecting a computer file;
(d) determining a type of said computer file, thereby determining a computer file type;
(e) determining at least one operation applicable to said computer file type;
(f) choosing at least one operation from said at least one operation applicable to said computer file type;
(f) using at least said computer file type to select one or more of said plurality of service websites, wherein each of said selected one or more of said service websites can at least perform said chosen at least one operation;
(g) presenting said selected one or more service websites to a user using said display device;
(h) allowing a user to choose at least one of said at least one presented selected one or more service websites, thereby obtaining at least one chosen service web site;
(i) obtaining a chosen protocol for each of said chosen at least one service website;
(j) storing on a computer readable medium a representation of said selected computer file type, a representation of said chosen at least one operation, a representation of said chosen at least one service website, and a representation of said chosen protocol for each of said chosen at least one service websites, thereby storing a content dependent procedure;
(k) placing on said desktop an automation icon representative of said stored content dependent procedure; and,
(l) displaying on said first display device said placed automation icon.
